# EUROPÄISCHE PATENTSCHRIFT

(11) **EP 0 793 564 B1**
(45) Veröffentlichungstag und Bekanntmachung des Hinweises auf die Patenterteilung: **16.08.2001**
(21) Anmeldenummer: 95937063.6
(22) Anmeldetag: 11.11.1995
(51) Int. Cl.: B27K 3/50

(54) **HOLZSCHUTZMITTEL**
WOOD PRESERVATIVE
PRODUIT DE PRESERVATION DU BOIS

(30) Priorität: 23.11.1994 DE 4441672
(43) Veröffentlichungstag der Anmeldung: 10.09.1997
(73) Patentinhaber: BASF AKTIENGESELLSCHAFT, 67056 Ludwigshafen (DE)
(72) Erfinder: GOETTSCHE, Reiner, D-76532 Baden-Baden (DE); KOBER, Reiner, D-67136 Fussgönheim (DE); KARDORFF, Uwe, D-68159 Mannheim (DE)
(86) Internationale Anmeldenummer: EP9504434
(87) Internationale Veröffentlichungsnummer: WO9615885

(56) Entgegenhaltungen:
- EP-A- 0 402 697
- EP-A- 0 466 206
- EP-A- 0 482 433
- DATABASE WPI Section Ch, Week 9604 Derwent Publications Ltd., London, GB; Class A97, AN 96-035788 & JP,A,07 304 609 ( XYENCE KK) , 21.November 1995

## Beschreibung

Es ist bekannt, Dimethylalkylamine, z.B. in Form von Salzen langkettiger Monocarbonsäuren, für den Einsatz in öligen, lösungsmittelhaltigen Holzschutzmitteln zu verwenden (EP 147 976). Entsprechendes gilt für Mischungen von Fenpropimorph und wasserunlöslichen Säuren, die in öligen Mischungen von aliphatischen und aromatischen Kohlenwasserstoffen enthaltenden Holzschutzmitteln angewendet werden (EP-A-0 402 697).

Es ist ferner bekannt, Dimethylalkylamin, Tridemorph, Fenpropimorph oder ihre Mischung, einen Emulgator und eine wasserunlösliche Säure als wasserlösliche Holzschutzmittel einzusetzen (EP-A-0 370 371).

Es ist weiter bekannt, Dimethylalkylamin, Tridemorph, Fenpropiomorph, eine wasserunslösliche Säure und eine wasserlösliche Säure als wasserlösliche Konzentrate im Holzschutz zu verwenden (DE-A-3 736 298).

Gegenstand der EP-A 482,433 sind Holzschutzmittel, die als wesentliche Komponenten Komplexbildende polymere Stichstoffverbindungen, Metallverbindungen und eine Metalle fixierende Säure enthalten. Als mögliche weitere Komponenten werden Triazole bzw. Dimethylalkylamine genannt.

Für den Einsatz als Holzschutzmittel wurden auch Mischungen auf Basis von Dimethylcocosfettamin, 2-Ethylhexansäure, Propiconazol und einem Emulgator beschrieben.

Diese wasserlöslichen Holzschutzmittel besitzen jedoch erhebliche anwendungstechnische Nachteile. Sie wirken korrodierend auf Eisen und Stahl und lösen u.a. Rost- und andere Eisenverbindungen von den Tränkbehälteroberflächen unter Bildung von emulgierbaren oder wasserlöslichen Eisensalzen ab, so daß sich Anwendungslösungen in kurzer Zeit stark braun verfärben. Das zu tränkende Holz wird hierdurch wiederum farblich beeinflußt und verändert, was sich z.B. in einer starken Grauverfärbung durch Reaktion der Eisenverbindungen mit Holzbestandteilen auswirkt. Gleichzeitig erhöht sich hierbei der pH-Wert in der Anwendungslösung; Instabilität der Lösungen bis hin zur Phasentrennung kann die Folge sein.

Es wurde jetzt gefunden, daß die anwendungstechnischen Eigenschaften der wasserlöslichen Holzschutzmittel erheblich verbessert werden, wenn man Holzschutzmittel verwendet, die 5 bis 65 Gew.-% eines Dimethylalkylamins, 2,5 bis 35 Gew.-% einer aliphatischen C₈-C₁₄-Dicarbonsäure und 0,25 bis 15 Gew.-% einer Triazolverbindung enthalten. Neben den hervorragenden anwendungstechnischen Eigenschaften besitzen die Holzschutzmittel eine sehr gute Wirksamkeit gegenüber holzzerstörenden Basidiomyceten.

Die neuen Holzschutzmittel (Konzentrate) sind wassermischbar und bilden bei der Verdünnung der Konzentrate mit Wasser klare bis leicht opake Lösungen. Zweckmäßig weisen die nach der Verdünnung der Konzentrate mit Wasser erhaltenen wäßrigen Lösungen (Imprägnierlösungen) einen pH-Wert von 4 bis 8, vorzugsweise von 5 bis 7 auf. Die erhaltenen wäßrigen Imprägnierlösungen zeichnen sich dadurch aus, daß die wirksamen Bestandteile sehr effektiv in das zu imprägnierende Holz eindringen und somit einen wirksamen Holzschutz zur Folge haben.

Ein Dimethylalkylamin ist ein N,N-Dimethyl-N-alkylamin, dessen Alkylrest beispielsweise 6 bis 20 C-Atome enthält. Bevorzugt werden Dimethylalkylamine mit 12 oder 14 C-Atomen im Alkylrest. Neben den reinen Dimethylalkylaminen können auch Mischungen, z.B. Mischungen aus Dimethyl-C₁₂-alkylamin und Dimethyl-C₁₄-alkylamin (Dimethyl-(C₁₂/C₁₄-Alkylamin) verwendet werden.

Die erfindungsgemäßen Holzschutzmittel enthalten C₈-C₁₄-Dicarbonsäuren. Geeignete Dicarbonsäuren sind z.B. Korksäure, Azelainsäure, Sebacinsäure, Undecandisäure, Dodecandisäure, Brassylsäure. Mit besonderem Vorteil wird Sebacinsäure verwendet.

Als Triazole kommen beispielsweise in Betracht:
(Z)-2-(1,2,4-Triazol-1-ylmethyl)-2-(4-fluorphenyl)-3-(2-chlorphenyl)-oxiran (Epoxiconazol), 2-(1-Chlorcyclopropyl-1-(2-chlorphenyl)-3-(1,2,4-triazol-1-yl)-propan-2-ol, 1-Butyl-1-(2,4-dichlorphenyl)-2-(1,2,4-triazol-1-yl)-ethanol (Hexaconazol), 1-[2-Chlorphenyl)methyl]-1-(1,1-dimethyl)-2-(1,2,4-triazol-1-yl-ethanol, 1-(4-Fluorphenyl)-1-(2-fluorphenyl)-2-(1,2,4-triazol-1-yl)-ethanol (Flutriafol), (RS)-4-(4-Chlorphenyl)-2-phenyl-2-(1H-1,2,4-triazol-1-yl-methyl)-butyronitril, 1-[(2 RS, 4 RS; 2 RS, 4 SR)-4-Brom-2-(2,4-dichlorphenyl)-tetrahydrofurfuryl]-1H-1,2,4-triazol, 3-(2,4-Dichlorphenyl)-2-(1H-1,2,4-triazol-l-yl)-quinazolin-4(3H)-on, (RS)-2,2-Dimethyl-3-(2-chlorbenzyl)-4-(1H-1,2,4-triazol-1-yl)-butan-3-ol, Bitertanol, Triadimefon, Triadimenol, Cyproconazol, Dichlobutrazol, Difenoconazol, Diniconazol, Etaconazol, Flusilazol, Penconazol, Tetraconazol, Bromuconazol, Metconazol, Fenbendazol, Fensilazol, 1-(2-(2,4,-Dichlorphenyl)-1,3-dioxolan-2-yl-methyl)-1H-1,2,4-triazol (Azaconazol), 1-(2-(2,4-Dichlorphenyl)-4-propyl-1,3-dioxolan-2-yl-methyl)-lH-1,2,4-triazol (Propiconazol), α-tert.-Butyl-a-(p-chlorphenylethyl)-H-1,2,4-triazol-1-ethanol (Tebuconazol).

Mit besonderem Vorteil werden Propiconazol, Penconazol, Cyproconazol, Hexaconazol und Tebuconazol verwendet.

Die Triazole können nicht nur in der Form der freien Base, sondern auch in Form eines Metallsalz-Komplexes oder als Säureadditionssalz vorliegen.

Zur Verbesserung der fungiziden Wirksamkeit kann es vorteilhaft sein, daß das erfindungsgemäße Holzschutzmittel zusätzlich Morpholinderivate, vorzugsweise die fungiziden Wirkstoffe Fenpropimorph (4-[3-(4-tert.-Butylphenyl)-2-methylpropyl]-cis-2,6-dimethylmorpholin), Fenpropidin (N-[3(4-tert.-Butylphenyl)-2-methylpropyl]-pipieridin oder Tridemorph (N-Tridecyl-2,6-dimethylmorpholin) oder deren Salze enthält.

Hierdurch wird eine synergistische Wirksamkeitsverbesserung erreicht. Mit besonderem Vorteil wird Fenpropimorph verwendet. Vorzugsweise werden Fenpropimorph, Fenpropidin oder Tridemorph und die Triazole im Gewichtsverhältnis 0,5:1 bis 10:1, vorzugsweise 1:1 bis 5:1, insbesondere 2:1 bis 3:1, verwendet.

Es kann weiter vorteilhaft, daß das erfindungsgemäße Holzschutzmittel zusätzlich eine wasserunlösliche Monocarbonsäure oder deren Salz enthält.

Geeignete wasserunslösliche Monocarbonsäuren sind z.B. eine unverzweigte aliphatische Monocarbonsäure mit 5 bis 20 C-Atomen wie Hexansäure, Heptansäure, Octansäure, Nonansäure, Decansäure oder eine verzweigte aliphatische Monocarbonsäure wie 2-Ethylhexansäure, 2-Ethylheptansäure, Isooctansäure, Isoheptansäure, Isononansäure, Versaticsäure oder Neocarbonsäure (stärker verzweigte Monocarbonsäuren). Weiter können auch andere wasserunlösliche Monocarbonsäuren wie z.B. Sorbinsäure, Benzoesäure, Cyclohexancarbonsäure verwendet werden. Mit besonderem Vorteil wird 2-Ethylhexansäure verwendet.

Die erfindungsgemäßen Holzschutzmittel können zusätzlich Borverbindungen, z.B. Borsäure, Alkaliborate oder Borsäureester als diffusionsfähige Bestandteile enthalten. Hierdurch wird im Bläue- und Schimmelschutz zusätzlich eine Verbesserung der Wirksamkeit erreicht.

Die erfindungsgemäßen Holzschutzmittel (Konzentrate) enthalten
5 bis 65 Gew.-%, insbesondere 25 bis 55 Gew.-%, Dimethylalkylamin, insbesondere Dimethyl-(C₁₂/C₁₄)alkylamin,
0 bis 35 Gew.-%, insbesondere 5 bis 20 Gew.-%, Morpholinderivate, insbesondere Fenpropimorph,
0,25 bis 15 Gew.-%, vorzugsweise 1 bis 10 Gew.-%, insbesondere 2,5 bis 7,5 Gew.-%, Triazole,
2,5 bis 35 Gew.-%, insbesondere 10 bis 25 Gew.-%, aliphatische C₈-C₂₀-Dicarbonsäuren, insbesondere Sebacinsäure,
0 bis 30 Gew.-%, insbesondere 2,5 bis 12,5 Gew.-% wasserunlösliche Monocarbonsäuren,
0 bis 30 Gew.-% Wasser,
0 bis 30 Gew.-% organische Lösungsmittel,
wobei die Summe jeweils 100 Gew.-% ergibt. Wasser und Lösungsmittel dienen hierbei u.a. der besseren Handhabung, z.B. Einstellung der Viskosität, Beschleunigung des Auflösevermögens der Konzentrate in Wasser. Die Lösungsmittel werden zum Teil gleichzeitig zum Lösen der Triazole benötigt.

Die erhaltenen Konzentrate können in flüssiger homogener Form, als Paste, aber auch in fester Form, vorliegen.

Als organische Lösungsmittel werden vorzugsweise wasserlösliche bzw. wassermischbare polare Lösungsmittel, z.B. Glykole (Ethylenglykol, Propylenglykol), Glykolether (Ethylenglykolmonomethylether, Ethylenglykolmonoethylether, Glykoletheracetate (Butylglykolacetat), N-Alkylpyrrolidone (N-Methylpyrrolidon), Alkohole, Dimethylformamid, Acethylformamid, Dimethylsulfoxid eingesetzt.

Zur Einstellung von pH-Werten, z.B. von ca. 6 oder niedriger, können den Konzentraten oder Imprägnierlösungen Hydroxycarbonsäuren, z.B. Weinsäure oder Apfelsäure, zugefügt werden.

Zur Vergrößerung des Wirkungsspektrums oder Erzielung besonderer Effekte, z.B. zusätzlicher Schutz gegen Insekten einschließlich Termiten, können die vorstehend genannten Formulierungen mit weiteren Wirkstoffen kombiniert werden, die gegebenenfalls mit geeigneten zusätzlichen Emulgatoren eingearbeitet werden.

Geeignete Mischungspartner sind z.B. die folgenden Verbindungen:
Sulfenamide wie Dichlofluanid, Tolylfluanid, Folpet, Fluorfolpet;
Benzimidazole wie Carbendazim, Benomyl, Fuberidazole, Thiabendazole oder deren Salze;
Thiocyanate wie Thiocyanatomethylthiobenzothiazol, Methylenbisthiocyanat,
quartäre Ammoniumverbindungen wie Benzyldimethyltetradecylammoniumchlorid, Benzyldimethyldodecylammoniumchlorid, Didecyldimethylammoniumchlorid;
quartäre Phosphoniumverbindungen;
Jodderivate wie Dijodmethyl-p-tolylsulfon, 3-Jod-2-propinyl-alkohol, 4-Chlorphenyl-3-jodpropargylformal, 3-Brom-2,3-dijod-2-propenylethylcarbonat, 2,3,3-Trijodallylalkohol, 3-Brom-2,3-dijod-2-propenylalkohol, 3-Jod-2-propinyl-n-butylcarbamat,
3-Jod-2-propinyl-n-hexylcarbamat, 3-Jod-2-propinyl-cyclohexylcarbamat, 3-Jod-2-propinyl-phenylcarbamat, 0-1-(6-Jodo-3-oxohex-5-inyl)-butylcarbamat, 0-1-(6-Jodo-3-oxo-hex-5-inyl)phenylcarbamat, Napcocide;
Phenolderivate wie Tribromphenol, Tetrachlorphenol, Tetrachlorphenol, 3-Methyl-4-chlorphenol, Dichlorophen, o-Phenylphenol, m-Phenylphenol, p-Phenylphenol, 2-Benzyl-4-chlorphenol; Bromderivate wie 2-Brom-2-nitro-1,3-propandiol, 2-Brom-2-brommethyl-glutardinitril;
Isothiazolinone wie N-Methylisothiazolin-3-on, 5-Chloro-N-methylisothiazolin-3-on, 4,5-Dichloro-N-octylisothiazolin-3-on, N-Octyl-isothiazolin-3-on;
Benzisothiazolinone wie 4,5-Trimethylisothiazol-3-on;
Pyridine wie 1-Hydroxy-2-pyridinthion (und ihre Na-, Fe-, Mn-, Zn-Salze), Tetrachlor-4-methylsulfonylpyridin;
Metallseifen wie Zinn-, Kupfer-, Zinknaphthenat, -octat, -2-ethylhexanoat, -oleat, -phosphat, -benzoat.

Organozinnverbindungen z.B. Tributyl (TBT)zinnverbindungen, Dialkyldithiocarbamate wie Na- und Zn-Salze von Dialkyldithiocarbamaten, Tetramethylthiuramdisulfid;
Nitrile wie 2,4,5,6-Tetrachlorisophthalodinitril;
Benzthiazole wie 2-Mercaptobenzothiazol;
Chinoline wie 8-Hydroxychinolin und deren Cu-Salze;
Tris-N-(cyclohexyldiazeniumdioxy)-aluminium, N-(Cyclohexyldiazeniumdioxy)-tributylzinn bzw. K-Salz, Bis-N-(cyclohexyldiazeniumdioxy) -kupfer.

Als Insektizide können bevorzugt zugesetzt werden:

Phosphorsäureester wie Azinphos-ethyl, Azinphos-methyl, 1-(4-Chlorphenyl)-4- (0-ethyl, S-propyl)-phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichloron;
Carbamate wie Aldocarb, Bendiocarb, 2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Primicarb, Promecarb, Propoxur und Thiocarb;
Organosiliciumverbindungen, vorzugsweise Dimethyl(phenyl)silylmethyl-3-phenoxybenzylether wie Dimethyl(4-ethoxyphenyl)-silylmethyl-3-phenoxybenzylether oder (Dimethylphenyl)-silyl-methyl-2-phenoxy-6-pyridylmethylether wie Dimethyl(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethylsilan; Pyrethroide wie Allethrin, Alphamethrin, Bioresmethrin, Byfenthrin, Cycloprothin, Cyfluthrin, Decamethrin, Cyhalothrin, Cypermethrin, Deltamethrin, α-Cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie
1-[(6-Chlor-3-pyridinyl)-methyl]-4,5-dihydro-N-nitro-lH-imidazol-2-amin(midacloprid), N-[(6-Chlor-3-pyridyl)methyl-]N'-cyano-N'-methylacetamid.

Die Anwendung zum Schutz des Holzes kann z.B. je nach Gefährdung des Holzes erfolgen:
a) durch Besprühen des Holzes mit der Imprägnierlösung,
b) durch Tauchen des Holzes in die Imprägnierlösung (Kurztauchen bis Trogtränken),
c) durch Tränkung des Holzes mit Hilfe von Druckunterschieden, z.B. Kesseldruck- oder Doppelvakuumtränkung,
d) durch Streichen des Holzes oder Fluten.

Bei Holzfolgeprodukten, z.B. Holzschnitten, Zellstoffen sowie weiteren technischen Produkten oder auch Cellulose enthaltenden Materialien, die einem Pilzefall zugänglich sind, z.B. Zwischenprodukte bei der Papierherstellung, verholzte Einjahrespflanzen (Bargasse, Raps), ist die Applikation den technischen Möglichkeiten anzupassen.

Die Wirksamkeit der Mittel im Bereich des Holzschutzes erstreckt sich beispielsweise auf:
a) Schimmelpilze (z.B. Aspergillus niger)
b) Moderfäulepilze (z.B. Chaetomium globosum)
c) Bläuepilze (z.B. Pullularia pullulans)
d) holzzerstörende Basidiomyceten (z.B. Serpula lacrymans, Coniophora puteana).

Die Anwendungskonzentration und Einbringmenge hängt dabei vom Gefährdungsgrad des Holzes, der Holzfolgeprodukte oder der Cellulose enthaltenden Materialien, aber auch von dem Anwendungsverfahren ab. So beträgt die Anwendungskonzentration des Konzentrats in der Imprägnierlosung im allgemeinen 0,1 bis 50 Gew.-%, vorzugsweise 0,2 bis 20 Gew.-%, die Einbringmenge beträgt z.B. 0,2 bis 40 kg/m³, vorzugsweise 0,5 bis 20 kg/m³. Bei Holzfolgeprodukten und Cellulose enthaltenden Materialien wird meist das unverdünnte Konzentrat eingesetzt (z.B. Sperrholz, Spanplatten, Bagasseplatten).

Die folgender Beispiele erläutern die Erfindung.

### Versuchsanordnung für Korrosionsversuche

Es werden kleine Tauchbecken aus Baustahl (ST 37) hergestellt und innen sandgestrahlt, mit folgender Abmessung: Höhe 11 cm, Seitenlänge je 8 cm (Bleche 2 mm Stärke). Durch natürliche oder künstliche Beregnung wird eine oberflächliche Rostbildung erhalten.

Nach Ausspülen mit Leitungswasser und Abtrocknung werden diese Behälter mit der Anwendungslösung (500 ml) gefüllt, die Verfärbung und das Aussehen der Lösung und des Behälters nach 7 Tagen geprüft, die pH-Wertveränderung gemessen und zusätzlich der Gehalt an gelöstem oder emulgiertem Eisen nach Abfiltrieren gröberer Bestandteile analytisch bestimmt.

Die hierbei erzielten Resultate wurden in Praxisversuchen in Tauchbecken (z.B. 15.000 - 20.000 1 Tränklösungen) bestätigt.

Nicht erfindungsgemäße Beispiele (alle %-Angaben sind Gew.-%).

| Beispiel A | |
|---|---|
| Dimethyl-(C₁₂/C₁₄)-alkylamin | 30 % |
| Fenpropimorph | 20 % |
| Polyoxyethylen(5)cocosamin | 25 % |
| 2-Ethylhexansäure | 25 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,65 | 7,25 |
| ΔpH = +0,6 | |
| Aussehen der Lösung nach Prüfung: | klar, dunkelbraun |
| Eisengehalt nach der Prüfung: | 155 mg/l |

| Beispiel B | |
|---|---|
| Dimethyl-(C₁₂/C₁₄)-alkylamin | 42,5 % |
| Propiconazol | 7,5 % |
| Polyoxyethylen(5)cocosamin | 20 % |
| 2-Ethylhexansäure | 30 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,90 | 7,50 |
| ΔpH = +0,6 | |
| | |
| Aussehen der Lösung nach Prüfung: | klar, dunkelbraun |
| Eisengehalt nach der Prüfung: | 400 mg/l |

| Beispiel C | |
|---|---|
| Dimethyl-(C₁₂/C₁₄)-alkylamin | 50 % |
| Isooctansäure | 10 % |
| Milchsäure 80 % (handelsüblich) | 20 % |
| Propylenglykol | 15 % |
| Wasser | 5 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 5,55 | 6,95 |
| △pH = +1,40 | |
| | |
| Aussehen der Lösung nach Prüfung: | milchig, trüb, braun |
| Eisengehalt nach der Prüfung: | 570 mg/l |

| Beispiel D | |
|---|---|
| Dimethyl-(C₁₂/C₁₄)-alkylamin | 50 % |
| 2-Ethylhexansäure | 24 % |
| Propionsäure | 3 % |
| Propylenglykol | 10 % |
| Wasser | 13 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,60 | 7,25 |
| ΔpH = +0,65 | |
| | |
| Aussehen der Lösung nach Prüfung: | trüb, stark braun gefärbt |
| Eisengehalt nach der Prüfung: | 210 mg/l |

| Beispiel E | |
|---|---|
| Dimethyl-(C₁₂/C₁₄)-alkylamin | 50 % |
| 2-Ethylhexansäure | 24 % |
| Methoxyessigsäure | 4,5 % |
| Propiconazol | 3,0 % |
| Propylenglykol | 10 % |
| Wasser | 8,5 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,51 | 7,12 |
| ΔpH = +0,61 | |
| | |
| Aussehen der Lösung nach Prüfung: | trüb, braun |
| Eisengehalt nach der Prüfung: | 195 mg/l |

| Beispiel F | |
|---|---|
| Dimethyl-(C₁₂/C₁₄)-alkylamin | 50 % |
| 2-Ethylhexansäure | 22,5 % |
| Milchsäure (handelsüblich) | 7,5 % |
| Propylenglykol | 10 % |
| Wasser | 10 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,43 | 7,13 |
| ΔpH = +0,7 | |
| | |
| Aussehen der Lösung nach Prüfung: | trüb, braun |
| Eisengehalt nach der Prüfung: | 255 mg/l |

### Erfindungsgemäße Beispiele (alle %-Angaben sind Gew.-%)

| Beispiel 1 | |
|---|---|
| Dimethyl-(C₁₂/C₁₄)-alkylamin | 50 % |
| 2-Ethylhexansäure | 5,0 % |
| Sebacinsäure | 20 % |
| Propiconazol | 10 % |
| Propylenglykol | 10 % |
| Wasser | 5,0 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,55 | 6,80 |
| ΔpH = +0,25 | |
| | |
| Aussehen der Lösung nach Prüfung: | klar, farblos |
| Eisengehalt nach der Prüfung: | 1,8 mg/l |

| Beispiel 2 | |
|---|---|
| Dimethyl-(C₁₂/C₁₄)-alkylamin | 40 % |
| 2-Ethylhexansäure | 5,0 % |
| Sebacinsäure | 16 % |
| Fenpropimorph | 10 % |
| Propiconazol | 3,33 % |
| Propylenglykol | 10 % |
| Wasser | 15,67 % |
| | |
| Korrosionsversuch: 7 Tage Anwendungskonzentration: | 3,5 % in Wasser |
| | |
| pH-Wert (20°C) vor Prüfung | pH-Wert (20°C) nach Prüfung |
| 6,45 | 6,69 |
| ΔpH = +0,24 | |
| | |
| Aussehen der Lösung nach Prüfung: | klar, leicht gelblich |
| Eisengehalt nach der Prüfung: | 2,5 mg/l |

| Beispiele 3 bis 9 | |
|---|---|
| Dimethyl-(C₁₂/C₁₄)-alkylamin | 45 % |
| 2-Ethylhexansäure | 5,0 % |
| Sebacinsäure | 20 % |
| Triazol | 5,0 % |
| Propylenglykol | 10 % |
| Wasser | 15 % |
| | |
| Korrosionsversuch: 7 Tage Anwendungskonzentration: | 3,5 % in Wasser |

| Beispiel | Triazol | pH-Wert | | | Aussehen der Lösung | Fe-Gehalt [mg/l] |
|---|---|---|---|---|---|---|
| | | vor | nach | ΔpH | | |
| 3 | Penconazol | 6,20 | 6,33 | 0,13 | klar, farblos | 1,6 |
| 4 | Tebuconazol | 6,19 | 6,35 | 0,16 | klar, farblos | 2,3 |
| 5 | Cyproconazol | 6,18 | 6,35 | 0,17 | klar, farblos | 2,1 |
| 6 | Bromoconazol | 6.18 | 6,36 | 0,18 | klar, leicht gelblich | 4,1 |
| 7 | Systane | 6,18 | 6,36 | 0,18 | klar, barblos | 2,0 |
| 8 | Difenconazol | 6,19 | 6,36 | 0,17 | klar, farblos | 2,4 |
| 9 | Flusilazol | 6,17 | 6,34 | 0,17 | klar, farblos | 1,8 |

| Beispiele 10 bis 17 | |
|---|---|
| Dimethyl-(C₁₂/C₁₄)-alkylamin | 40 % |
| Fenpropimorph | 10 % |
| 2-Ethylhexansäure | 5,0 % |
| Sebacinsäure | 18 % |
| Triazol | 5,0 % |
| Propylenglykol | 10 % |
| Wasser | 12 % |
| | |
| Korrosionsversuch: 7 Tage Anwendungskonzentration | 3,5 % in Wasser |

| Beispiel | Triazol | pH-Wert | | | Aussehen der Lösung | Fe-Gehalt [mg/l] |
|---|---|---|---|---|---|---|
| | | vor | nach | ΔpH | | |
| 10 | Penconazol | 6,17 | 6,28 | 0,11 | klar, sehr leicht gelblich | 3,6 |
| 11 | Tebuconazol | 6,13 | 6,28 | 0,15 | klar, sehr leicht gelblich | 2,0 |
| 12 | Cyproconazol | 6,14 | 6,27 | 0,13 | klar, sehr leicht gelblich | 2,0 |
| 13 | Bromoconazol | 6.13 | 6,30 | 0,17 | klar, leicht gelblich | 2,9 |
| 14 | Systane | 6,20 | 6,29 | 0,09 | klar, sehr leicht gelblich | 4,0 |
| 15 | Difenconazol | 6,18 | 6,31 | 0,13 | klar, farblos | 3,2 |
| 16 | Flusilazol | 6,15 | 6,30 | 0,15 | klar, sehr leicht gelblich | 4,7 |
| 17 | Propiconazol | 6,17 | 6,30 | 0,13 | klar, sehr leicht gelblich | 3,1 |

## Patentansprüche

1. Wasserverdünnbares Holzschutzmittel, enthaltend
a) 5 bis 65 Gew.-% eines Dimethylalkylamins,
b) 2,5 bis 35 Gew.-% einer aliphatischen C₈-C₁₄-Dicarbonsäure und
c) 0,25 bis 15 Gew.-% einer Triazolverbindung.

2. Holzschutzmittel gemäß Anspruch 1, dadurch gekennzeichnet, daß es als aliphatische C₈-C₁₄-Dicarbonsäure Sebacinsäure enthält.

3. Holzschutzmittel gemäß Anspruch 1, dadurch gekennzeichnet, daß es Dimethylalkylamine mit 6 bis 20 C-Atomen im Alkylrest enthält.

4. Holzschutzmittel gemäß Anspruch 1, dadurch gekennzeichnet, daß es Dimethylalkylamine mit 12 und/oder 14 C-Atomen im Alkylrest enthält.

5. Holzschutzmittel gemäß Anspruch 1, dadurch gekennzeichnet, daß es als Triazolverbindung Propiconazol, Penconazol, Cyproconazol, Hexaconazol oder Tebuconazol enthält.

6. Holzschutzmittel gemäß Anspruch 1 bis 5, dadurch gekennzeichnet, daß es zusätzlich eine wasserunlösliche Monocarbonsäure oder ihr Salz enthält.

7. Holzschutzmittel gemäß Anspruch 6, dadurch gekennzeichnet, daß es als wasserunlösliche Monocarbonsäure 2-Ethylhexansäure enthält.

8. Holzschutzmittel gemäß Anspruch 1 bis 7, dadurch gekennzeichnet, daß es zusätzlich Fenpropimorph, Fenpropidin, Tridemorph oder deren Mischung enthält.

9. Holzschutzmittel gemäß Anspruch 8, dadurch gekennzeichnet, daß es zusätzlich Fenpropimorph enthält.

10. Verfahren zum Schutz von Holz, dadurch gekennzeichnet, daß man das Holz mit einem Holzschutzmittel gemäß Anspruch 1 bis 9 behandelt.

11. Imprägnierlösung zur Imprägnierung von Holz zum Schutz gegen Pilze, enthaltend ein Holzschutzmittel gemäß Anspruch 1 bis 9 und zusätzlich Wasser.

12. Verfahren zum Imprägnieren von Holz, dadurch gekennzeichnet, daß man ein Holzschutzmittel gemäß Anspruch 1 bis 9 mit Wasser verdünnt und das Holz mit der erhaltenen wäßrigen Imprägnierlösung imprägniert.

## Claims

1. A water-dilutable wood preservative containing
a) from 5 to 65% by weight of a dimethylalkylamine,
b) from 2.5 to 35% by weight of an aliphatic C₈-C₁₄-dicarboxylic acid and
c) from 0.25 to 15% by weight of a triazole compound.

2. A wood preservative as claimed in claim 1, which contains sebacic acid as the aliphatic C₈-C₁₄-dicarboxylic acid.

3. A wood preservative as claimed in claim 1, which contains a dimethylalkylamine having 6 to 20 carbon atoms in the alkyl radical.

4. A wood preservative as claimed in claim 1, which contains a dimethylalkylamine having 12 and/or 14 carbon atoms in the alkyl radical.

5. A wood preservative as claimed in claim 1, which contains propiconazole, penconazole, cyproconazole, hexaconazole or tebuconazole as the triazole compound.

6. A wood preservative as claimed in any of claims 1 to 5, which additionally contains a water-insoluble monocarboxylic acid or its salt.

7. A wood preservative as claimed in claim 6, which contains 2-ethylhexanoic acid as the water-insoluble monocarboxylic acid.

8. A wood preservative as claimed in any of claims 1 to 7, which additionally contains fenpropimorph, fenpropidin, tridemorph or a mixture thereof.

9. A wood preservative as claimed in claim 8, which additionally contains fenpropimorph.

10. A process for preserving wood, wherein the wood is treated with a wood preservative as claimed in any of claims 1 to 9.

11. An impregnating solution for impregnating wood for preservation from fungi, containing a wood preservative as claimed in any of claims 1 to 9 and additionally water.

12. A process for impregnating wood, wherein a wood preservative as claimed in any of claims 1 to 9 is diluted with water and the wood is impregnated with the aqueous impregnating solution obtained.

## Revendications

1. Produit diluable à l'eau pour la protection du bois, contenant
a) 5 à 65 % en poids d'une diméthylalkylamine,
b) 2,5 à 35 % en poids d'un acide dicarboxylique aliphatique en C8-C14 et
c) 0,25 à 15 % en poids d'un dérivé du triazole.

2. Produit pour la protection du bois selon la revendication 1, caractérisé par le fait que l'acide dicarboxylique aliphatique en C8-C14 qu'il contient est l'acide sébacique.

3. Produit pour la protection du bois selon la revendication 1, caractérisé par le fait qu'il contient des diméthylalkylamines contenant 6 à 20 atomes de carbone dans la partie alkyle.

4. Produit pour la protection du bois selon la revendication 1, caractérisé par le fait qu'il contient des diméthylalkylamines à 12 et/ou 14 atomes de carbone dans le groupe alkyle.

5. Produit pour la protection du bois selon la revendication 1, caractérisé par le fait qu'il contient en tant que dérivé du triazole, le Propiconazol, le Penconazol, le Cyproconazol, l'Hexaconazol ou le Tebuconazol.

6. Produit pour la protection du bois selon les revendications 1 à 5, caractérisé par le fait qu'il contient en outre un acide monocarboxylique insoluble dans l'eau ou l'un de ses sels.

7. Produit pour la protection du bois selon la revendication 6, caractérisé par le fait que l'acide monocarboxylique insoluble dans l'eau qu'il contient est l'acide 2-éthylhexanoïque.

8. Produit pour la protection du bois selon les revendications 1 à 7, caractérisé par le fait qu'il contient en outre du Fenpropimorph, du Fenpropidin, du Tridemorph ou leurs mélanges.

9. Procédé pour la protection du bois selon la revendication 8, caractérisé par le fait qu'il contient en outre du Fenpropimorph.

10. Procédé pour la protection du bois, caractérisé par le fait que l'on traite le bois par un produit protecteur selon les revendications 1 à 9.

11. Solution d'imprégnation pour l'imprégnation du bois qu'on veut protéger contre les mycètes, contenant un produit pour la protection du bois selon les revendications 1 à 9 et de l'eau.

12. Procédé pour l'imprégnation du bois caractérisé par le fait que l'on dilue un produit pour la protection du bois selon les revendications 1 à 9 par de l'eau et on imprègne le bois par la solution aqueuse d'imprégnation ainsi obtenue.
